# EUROPÄISCHE PATENTSCHRIFT

(11) **EP 0 785 051 B1**
(45) Veröffentlichungstag und Bekanntmachung des Hinweises auf die Patenterteilung: **17.01.2001**
(21) Anmeldenummer: 96119657.3
(22) Anmeldetag: 07.12.1996
(51) Int. Cl.: B27B 1/00, B27B 7/04, B27B 25/00, B27B 31/08

(54) **Verfahren und Vorrichtung zum Einschneiden eines Baumstammes**
Method and device for cutting logs
Procédé et dispositif pour découper des troncs d'arbres

(30) Priorität: 16.12.1995 DE 19547193
(43) Veröffentlichungstag der Anmeldung: 23.07.1997
(73) Patentinhaber: GEBRÜDER LINCK MASCHINENFABRIK "GATTERLINCK" GmbH & Co.KG, D-77704 Oberkirch (DE)
(72) Erfinder: Gross, Hermann, 77794 Lautenbach (DE); Schneider, Horst, 77704 Oberkirch (DE)
(74) Vertreter: Fuchs Mehler Weiss & Fritzsche

(56) Entgegenhaltungen:
- EP-A- 0 106 907
- WO-A-85/05062
- WO-A-86/05433
- WO-A-87/02297
- DE-A- 1 905 744
- DE-A- 3 244 459
- DE-C- 504 742
- DE-C- 4 033 055
- DE-U- 9 214 929
- FR-A- 2 503 613
- US-A- 4 583 576
- US-A- 5 447 186

## Beschreibung

Die Erfindung betrifft ein Verfahren zum Einschneiden eines natürlichen Baumstammes in seitliche Schwarten, gegebenenfalls unbesäumte Seitenware und ein an mindestens zwei Seiten baumrandiges Model nach dem Oberbegriff des Patentanspruches 1. Die Erfindung betrifft ferner eine Vorrichtung zur Durchführung eines solchen Verfahrens gemäß dem Oberbegriff des Patentanspruches 5.

Seit langem sind zum Einschneiden noch unbearbeiteter, natürlicher Baumstämme Sägegatter-Anlagen bekannt. Teile einer solchen Anlage ergeben sich beispielsweise aus der US-A-4 139 035. Die wesentlichen Merkmale des Gegenstandes der genannten Druckschrift betreffen zwar das Ausrichten des Baumstammes vor dessen Einführen in das Gatter, es sind der Druckschrift aber die Transportmittel für das Vorschieben des Baumstammes in das Gatter entnehmbar.

Die Vorschubmittel für den Baumstamm bestehen bei der bekannten Vorrichtung aus zwei unabhängig voneinander in Längsrichtung auf das Sägeaggregat zu bewegbaren Wagen zum Tragen des Baumstammes. Nicht unmittelbar entnehmbar ist der genannten Druckschrift eine dem Sägeaggregat vorgelagerte ortsfeste Unterstützungseinrichtung für den Baumstamm. Da bei dem beim vorbekannten Gegenstand verwendeten Sägegatter die Zuführwagen für den Baumstamm nicht durch das Gatter hindurch mitgeführt werden können, bedarf es einer ortsfesten Unterstützungseinrichtung, über die der nachlaufende Zuführwagen den Baumstamm in das Gatter hineinschiebt. Mangels zusätzlicher dargestellter Mittel dient bei der bekannten Vorrichtung vermutlich der vordere Zuführwagen, wenn er vor dem Sägegatter zum Anschlag kommt, bevor der Baumstamm in das Gatter eingetreten ist, von diesem Zeitpunkt an als eine solche ortsfeste Unterstützungseinrichtung. Die genannte Druckschrift zeigt, abgesehen von den darin vornehmlich behandelten elektronischen Ausrichtmitteln für den Baumstamm, eine Ausführungsform einer üblichen Sägegatteranlage.

Sägegatteranlagen haben häufig Zuführeinrichtungen für den Baumstamm, wie sie in der US-A-4 139 035 dargestellt sind, nämlich bestehend aus einem im allgemeinen angetriebenen Zuführwagen für das nachlaufende Ende des Baumstammes und einem nicht angetriebenen Schleppwagen für das vorlaufende Ende des Baumstammes, der dann vor dem Sägegatter zum Halten gebracht wird. Es sind aber durchaus Sägegatteranlagen mit anderen Zuführmitteln bekannt, beispielsweise einem endlos umlaufenden Kettenförderer, auf den der Baumstamm von der Seite her aufgelegt wird, wobei zusätzlich noch von oben wirkende Andruckmittel vorhanden sein können, die den Baumstamm in seiner Position auf dem Kettenförderer halten. In der Regel weisen Gatteranlagen jedoch vor den Sägeblättern ein Paar von Einzugswalzen mit horizontalen Achsen auf, die dann den eigentlichen Vorschub des Baumstammes durch das Gatter übernehmen. Die untere dieser Einzugswalzen dient dann häufig als diese ortsfeste Unterstützungseinrichtung, indem der Baumstamm von der Zuführeinrichtung mit seinem vorlaufenden Ende leicht auf die untere Einzugswalze angehoben wird.

Gatteranlagen der hier beschriebenen Art dienen dem Einschneiden von Rundholz, also von Baumstämmen, die noch keine anderweitige Vorbearbeitung erfahren haben. Je nach Anzahl der im Gatter vorhandenen Sägeblätter werden von jeder Seite des Baumstammes eine Schwarte und ein oder mehrere baumrandige Seitenbretter abgetrennt, so daß als Hauptware aus der Mitte des Stammes ein Model übrig bleibt, welches an seiner Ober- und Unterseite noch baumrandig ist. Die Figur 2 der US-A-4 139 035 zeigt beispielsweise ein Gatter mit zwei Sägeblattpaaren, die geeignet sind, von jeder Seite des Baumstammes eine Schwarte und ein baumrandiges Seitenbrett gleichzeitig abzutrennen. Das Gatter ist zum Einschneiden von Baumstämmen auf diese Weise geeignet, da die verhältnismäßig große senkrechte Erstreckung der Sägeblätter kein genaues Ausrichten des Baumstammes in einer vertikalen Ebene erfordert. Allein schon durch seine Konizität kann der Baumstamm bei seinem Führen über die ortsfeste Unterstützungseinrichtung seine Höhenlage im Gatter ändern, was für die allein ausgeführten senkrechten Sägeschnitte jedoch nicht von Bedeutung ist.

Das an zwei Seiten baumrandige Model, welches nach dem ersten Durchgang eines Baumstammes durch das Gatter erhalten wird, kann um 90° gedreht nochmals durch das Gatter geführt werden, wobei ebenfalls wieder Schwarten und noch baumrandige Seitenbretter entstehen können. Sägegatteranlagen der hier beschriebenen Art sind in kleineren Sägewerken auch noch heute sehr häufig anzutreffen. Die durch die allein senkrechten Sägeschnitte erhaltenen baumrandigen Bretter werden anschließend besäumt, wobei dieses Besäumen in der Regel auf einer gesonderten Vorrichtung erfolgt.

Ein Nachteil der hin- und hergehenden Arbeitsweise der Sägeblätter einer Gattersäge ist eine nach modernen Bearbeitungskriterien verhältnismäßig grobe Oberfläche der Schnittflächen, welche für eine Reihe von Anwendungsfällen einer Nachbearbeitung bedarf. Außerdem ist die Hubfrequenz von Gattersägen konstruktionsmäßig begrenzt, bzw. würde eine gewünschte Erhöhung einen unverhältnismäßigen Konstruktions- und Kapitalaufwand erfordern.

Es besteht vielfach der Wunsch, ein Verfahren zum Einschneiden von Rundholz, wie es im Grunde genommen dem Ablauf in einer üblichen Sägegatter-Anlage entspricht, dahingehend zu verbessern, daß größere Leistungen bei verbesserter Schnittqualität erzielt werden können. Idealerweise sollte dies durch Ersatz des Sägegatters erreichbar sein, wobei die Anlage im übrigen in ihrem Umfeld aber praktisch nicht verändert zu werden braucht.

Eine Lösung dieses Problems würde vielen kleineren Sägewerken die Möglichkeit eröffnen, ohne Errichtung einer vollständigen Neuanlage, d.h. ohne überhöhtes Investitionsvolumen Qualität und Leistung ihrer Anlage zu steigern.

Aus der Zerspanungstechnik in Zerspanerstraßen sind Doppelwellenkreissägen in großem Umfang bekannt. Dort werden sie jedoch an einer Stelle eingesetzt, an der ein Baumstamm soweit vorbearbeitet ist, daß er einerseits eine ebene Auflagefläche für seine ganz genaue definierte Führung wie auch schon weitere Längsbearbeitungen zum Beseitigen der natürlichen Konizität erfahren hat, so daß die Doppelwellenkreissägen, die bis auf die vorgesehene Schnittbreitenverstellung der Sägeblätter fest in die Anlage eingebaut sind, nur noch ein weitgehend vorprofiliertes Model aufteilen brauchen.

Für das unmittelbare Aufschneiden von Rundholz wären an sich separate Kreissägen mit eigenen Wellen besser geeignet, da mit ihnen eine größere Einschneidtiefe erreicht werden kann, die der Flexibilität von Sägegattern in vertikaler Richtung näher kommt. Der Austausch eines Sägegatters durch Einwellenkreissägen hat jedoch den Nachteil, daß diese Sägen einen wesentlich größeren Platzbedarf hätten, für den der Raum eines vorhandenen Sägegatters nicht ausreicht.

Die Doppelwellenkreissäge hat dagegen den Vorteil, daß mit ihr parallele Sägeschnitte praktisch an der gleichen Stelle ausgeführt werden können. Sie hat jedoch den Nachteil, daß durch die mehrfache konzentrische Wellenanordnung die Einschnitttiefe der Sägeblätter reduziert wird. Andererseits lassen sich auch die Sägeblätterdurchmesser nicht unbeschränkt vergrößern.

Um den möglichen lichten vertikalen Abstand zwischen dem Wellenpaar einer Doppelwellenkreissäge optimal nutzen zu können, ist es aus der aus dem Hause der Anmelderin/Patentinhaberin stammenden WO 87/02297 bekannt, zum Schutz der Wellen von Doppelwellenkreissägen käfigartige Fräser anzubringen, die dann mit dem Werkstück in Eingriff gelangen und das Werkstück in den betroffenen Bereichen in seiner Dicke reduzieren, wenn diese den lichten Abstand zwischen den Sägewellen überschreitet. In der WO 87/02297 ist zwar der Eingriff solcher Fräser schematisch an einem Rundholzquerschnitt dargestellt, die Druckschrift bezieht sich in ihrer Einleitung aber auf den herkömmlichen Einsatz von Doppelwellen-Kreissägen in Zerspanerlinien und liefert keinen Hinweis dafür, wie ein natürlicher Baumstamm gehandhabt werden müßte, um ihn in der dargestellten Vorrichtung verarbeiten zu können.

Ausgehend von der WO 87/02297 liegt der Erfindung die Aufgabe zugrunde, ein Verfahren und eine leistungsfähige Vorrichtung zum unmittelbaren Einschneiden natürlicher Baumstämme zur Verfügung zu stellen, die in das Umfeld herkömmlicher Sägegatter-Anlagen passen.

Diese Aufgabe wird grundsätzlich durch die Merkmale der unabhängigen Ansprüche 1 und 5 gelöst.

Insofern nicht eine äußerst begrenzte Verarbeitungsdicke in Kauf genommen werden kann, ist es vorrichtungsmäßig für die Erfindung erforderlich, daß die ortsfeste Unterstützungseinrichtung und das Sägeaggregat relativ zueinander höhenverstellbar sind. Auf diese Weise läßt sich der aufzuschneidende Baumstamm in seiner Höhenlage optimal zwischen ein Paar von Doppelwellenkreissägen bringen. Diese relative Höhenlage ist während der Bearbeitung eines Baumstammes als Ergebnis beispielsweise einer elektronischen Vermessung kontinuierlich veränderbar. Für eine solche Anlage geeignete optisch-elektronische Vermessungseinrichtungen und Ausrichteinrichtungen sind bekannt, und es wird nur beispielhaft auf die schon zitierte US-A-4 139 035 verwiesen.

Die Erfindung sieht ferner vor, daß der Baumstamm in seinen Bereichen außerhalb der zur Baumstammitte hin weisenden innersten Sägeblätter dann in seiner Dicke reduziert wird, wenn die Dicke in diesen Bereichen den Abstand zwischen den Sägewellen erreicht oder überschreitet. Vorrichtungsmäßig wird dies durch den Sägeblättern vorgelagerte Fräser erreicht. Vorzugsweise handelt es sich um zylindrische, fliegend gelagerte Fräser, die um horizontale Wellen rotieren.

Entsprechend der Vielfalt der bei Gatteranlagen zu findenden Transportmittel können solche im allgemeinen auch für die erfindungsgemäße Vorrichtung Einsatz finden oder für sie weiterverwendet werden, insofern eine stationäre Unterstützungseinrichtung vor dem Sägeaggregat vorhanden ist, und die Höhen des Sägeaggregates und der Unterstützungseinrichtung relativ zueinander veränderbar sind. Da bei bestehenden Gatteranlagen diese Unterstützungseinrichtung in der Regel nicht relativ zu den Sägen höhenverstellbar ist, und um bei einem Austausch möglichst auch dieser Unterstützungseinrichtung vorgelagerte Transportmittel für die Baumstämme unverändert beibehalten zu können, wird erfindungsgemäß vorzugsweise das gesamte Sägeaggregat höhenverstellbar ausgeführt.

Zusätzlich zu Transportmitteln für den Baumstamm zum Sägeaggregat sind erfindungsgemäß vorzugsweise noch Einzugsmittel zum Übernehmen des Vorschubes des Baumstammes von den Transportmitteln und zum Einziehen des Baumstammes in das Sägeaggregat vorgesehen. Solche zusätzlichen Einzugsmittel sind auch bei bestehenden Gatteranlagen häufig schon vorhanden. Sie können aus einem Paar horizontaler Einzugswalzen bestehen, von denen zumindest die obere höhenverstellbar ist und die untere erfindungsgemäß als diese ortsfeste Unterstützungseinrichtung dient, deren relative Höhenlage in bezug auf das Sägeaggregat veränderbar ist, wobei bei Einbau in bestehende Anlagen die Höhenverstellbarkeit zweckmäßigerweise in das Sägeaggregat integriert wird. Auch die das Sägeaggregat verlassenden Teile des aufgeteilten Baumstammes werden bereits bei bekannten Gatteranlagen entsprechend geführt. So können beispielsweise Spaltkeile zum senkrechten Führen des Models und zum Separieren der Seitenware vorgesehen sein. Ferner können hinter dem Sägeaggregat Abzugsmittel für das erzeugte Model vorgesehen sein, die auch wieder aus einem Paar horizontaler, angetriebener Walzen bestehen, von denen zumindest die obere Walze höhenverstellbar ist.

In einer bevorzugten Ausführungsform weisen die Transportmittel für den Baumstamm einen in Vorschubrichtung des Baumstammes hin- und herbewegbaren, insbesondere gleisgebundenen, angetriebenen Spannwagen zur Aufnahme des nachlaufenden Endes des Baumstammes und einen zwischen Spannwagen und der ortsfesten Unterstützungseinrichtung angeordneten, ebenfalls hin- und herbewegbaren, nicht angetriebenen Schleppwagen als zumindest zeitweises Auflager für das vorlaufende Ende des Baumstammes auf, wobei der Auflagerpunkt für den Baumstamm auf dem Schleppwagen auf einer zumindest geringfügig niedrigeren Höhe liegt als der Auflagerpunkt für den Baumstamm auf der ortsfesten Unterstützungseinrichtung. Wird der Baumstamm mit seinem vorlaufenden Ende auf die ortsfeste Unterstützungseinrichtung zubewegt, wird er durch diese geringfügig an- und gleichzeitig vom Schleppwagen abgehoben, wobei letzterer seine Eigenschaft als Transportmittel beendet hat. Das weitere Führen des nachlaufenden Endes des Baumstammes erfolgt dann ausschließlich durch den Spannwagen. Auf dem Spannwagen sind vorzugsweise auch die Mittel zum Ausrichten des Baumstammes vorgesehen. Sie können aus einer das Baumstammende umgreifenden Spanngabel bestehen, welche drehbar und in ihrer Position seiten- und höhenverstellbar ist. Die Spanngabel muß spätestens zu dem Zeitpunkt außer Eingriff mit dem Baumstamm gebracht werden, zu dem ein Weiterbewegen des Spannwagens vor dem Sägeaggregat nicht mehr möglich ist. Das weitere Vorschieben des Baumstammes durch das Sägeaggregat wird durch die Ein- und Abzugseinrichtungen übernommen, die weitere Führung durch Führungsmittel hinter dem Sägeaggregat, beispielsweise die erwähnten Spaltkeile.

In einer weiteren bevorzugten Ausführungsform der Erfindung ist die Drehzahl der Doppelwellenkreissäge in Abhängigkeit von der Vorschubgeschwindigkeit eines Baumstammes veränderlich. Die Vorschubgeschwindigkeit eines Baumstammes ihrerseits muß im allgemeinen der Dicke des Baumstammes und der Art des Holzes angepaßt werden, um die Leistungsgrenzen des Sägeaggregates nicht zu überschreiten. Übliche Vorschubgeschwindigkeiten liegen zwischen etwa 6 und 25 m/min. Für einen akzeptablen Sägeschnitt soll der Holzabtrag pro Sägezahn zwischen etwa 0,3 und 0,8 mm liegen. Unter Berücksichtigung der Zähnezahl des Sägeblattes kann die Sägendrehzahl dann entsprechend, vorzugsweise automatisch, optimiert werden.

Für den Fall, daß die Hohlwellen der Doppelwellenkreissäge gestellfest sind und die innersten Sägeblätter auf den Sägewellen axial verschiebbar, müssen die Begrenzungsfräser ebenfalls axial verschiebbar sein, um sie mit ihren Enden jeweils auf die Position der innersten Sägeblätter abstimmen zu können. Dies erfolgt zweckmäßigerweise auch automatisch. Nur ergänzend sei darauf hingewiesen, daß natürlich der linke und rechte Teil des Sägeaggregates auch quer zur Holzvorschubrichtung verstellbar ausgeführt sein muß, um das gesamte Sägeaggregt in horizontaler Richtung quer zum Holzvorschub an unterschiedliche Stammdurchmesser anpassen zu können.

Der Spannwagen für das Ausrichten und das Zuführen eines Baumstammes zum Sägeaggregat kann mit einem Führersitz versehen sein, von dem aus alle erforderlichen Funktionen ausführbar sind, wie dies auch schon aus Gatteranlagen bekannt ist, vorzugsweise sind alle diese Funktionen, insofern sie nicht automatisch ausgeführt werden, fernbedienbar von einem Führerstand, der sich ortsfest bei der Anlage befindet.

Im folgenden werden Verfahren und Vorrichtung gemäß der Erfindung anhand der Figuren der beigefügten Zeichnung noch näher erläutert. Darin stellen dar:
- Fig. 1a und 1b: eine erste Ausführungsform einer Anlage zum Einschneiden von Baumstämmen,
- Fig. 2: einen schematischen Querschnitt durch einen Baumstamm mit schematischer Darstellung des Eingriffes der Werkzeuge einer Vorrichtung nach den Figuren 1a und 1b,
- Fig. 3: einen schematischen Längsschnitt durch einen Baumstamm mit schematischer Darstellung des Eingriffes der Werkzeuge.

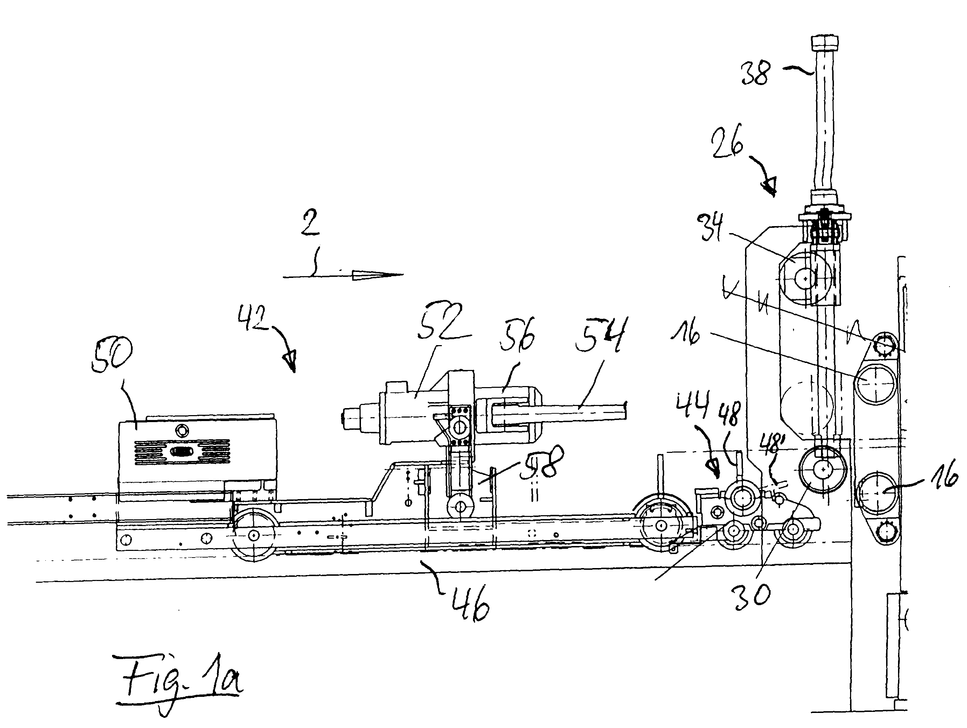

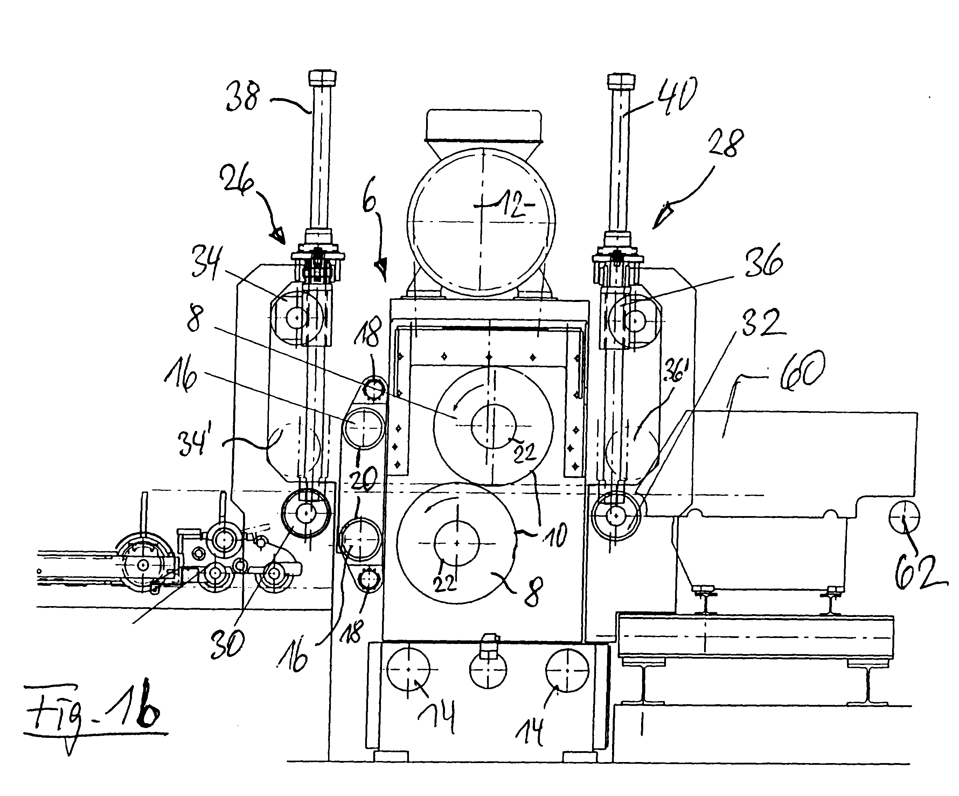

Die Figuren 1a und 1b, die überlappend aneinandergesetzt zu denken sind, stellen eine Vorrichtung zum Einschneiden von Baumstämmen in seitlicher Ansicht dar. Mit dem Pfeil 2 ist die Vorschubrichtung eines Baumstammes 4 durch die Vorrichtung angegeben. Kernstück der Vorrichtung ist ein Sägeaggregat 6 mit einer Doppelwellenkreissäge 8, von der in der seitlichen Ansicht nur ein Wellenpaar sichtbar ist. Die Doppelwellen dieses Paares sind versetzt übereinander angeordnet, damit die Sägeblätter sich mit ihren Flugkreisen 10 in vertikaler Richtung geringfügig überlappen können, um einen vollständigen Trennschnitt auszuführen. Jede Sägewelle ist koaxial mit mindestens zwei Sägeblättern bestückt, kann aber auch nmit einer größeren Zahl von Sägeblättern versehen werden, die jeweils gleiche Flugkreisdurchmeser aufweisen. Die in Figur 1b dargestellte Doppelwellenkreissäge 8 ist mit zwei Wellenpaaren ausgerüstet, die von beiden Seiten dem zu verarbeitenden Baumstamm zugewandt sind und sich in der zeichnerischen Darstellung der Fig. 1b in Deckung befinden. Ihre Anordnung kann der Fig. 2 entnommen werden.

Entsprechend besteht das gesamte Sägeaggregat 6 aus zwei Teilen, die seitlich des Vorschubweges für den Baumstamm angeordnet sind, und von denen jedes mit einem dieser Wellenpaare der Doppelwellenkreissäge 8 versehen ist. Jeder Teil des Sägeaggregates 6 ist mit einem Hauptantriebsmotor 12 versehen. Die Übertragungsmittel vom Hauptantriebsmotor auf die Doppelwellenkreissäge 8 sind in Fig. 1b nicht dargestellt. Beide Teile des Sägeaggregates 6 sind quer zum Vorschubweg 2 für den Baumstamm 4 vorzugsweise symmetrisch verstellbar, um das Sägeaggregat 6 in seiner Gesamtbreiteneinstellung auf unterschiedliche Baumstammdurchmesser anpassen zu können. Zu diesem Zweck sind die Teile des Sägeaggregates 6 auf horizontalen Führungsstangen 14 verschiebbar gelagert.

Dem Sägeaggregat 6 in Vorschubrichtung 2 gesehen vorgelagert sind obere und untere Begrenzungsfräser 16. Die motorgetriebenen Begrenzungsfräser 16 sind als Walzenfräser mit horizontalen Achsen ausgebildet und auf Führungen 18 querverschiebbar. Die Fräser 16 sind in senkrechter Richtung so wie auch die Wellenpaare der Doppelwellenkreissäge 8 symmetrisch zu einer gedachten Horizontalachse durch die Vorrichtung angeordnet. Der lichte senkrechte Abstand zwischen den Eingriffskreisen 20 der Begrenzungsfräser 16 ist etwas geringer als der lichte senkrechte Abstand zwischen den Wellen 22 bzw. deren äußeren Umfangsflächen eines Wellenpaares der Doppelwellenkreissäge 8. Die Begrenzungsfräser 16 tauchen von den Seiten der Vorrichtung her nur jeweils bis zur Position der innersten Sägeblätter 24 in die Vorrichtung ein (siehe Figur 2).

Dem Sägeaggregat 6 mit der Kombination aus Doppelwellenkreissäge 8 und den vor dieser angeordneten Begrenzungsfräsern 16 ist in Vorschubrichtung 2 gesehen eine Einzugseinrichtung 26 für den Baumstamm vorgelagert und eine Abzieheinrichtung 28 für den Baumstamm nachgeordnet. Jede dieser beiden Einrichtungen besteht aus einer angetriebenen unteren Walze mit horizontaler Achse (untere Einzugswalze 30 und untere Abzugswalze 32) sowie aus einer oberen angetriebenen Walze mit horizontaler Achse (obere Einzugswalze 34 und obere Abzugswalze 36), von denen die oberen Walzen an Führungsstangen 38 bzw. 40 höhenverstellbar sind. Die untersten Positionen der oberen Walzen 34 und 36 sind gestrichelt unter den Bezugszeichen 34' und 36' dargestellt. Es ist aus Fig. 1b erkennbar, daß in dem Zustand, der zeichnerisch dargestellt ist, die untere Einzugswalze 30 und die untere Abzugswalze 32, von denen zumindest die erstere ortsfest angeordnet ist, in der zeichnerischen Darstellung gegenüber der Doppelwellenkreissäge 8 zu hoch liegen. Wie bereits weiter oben ausgeführt, ist das gesamte Sägeaggregat 6 (mit Hilfe nicht dargestellter Mittel) höhenverstellbar ausgebildet und befindet sich in der Darstellung der Fig. 1b in seiner untersten Stellung. Im Betrieb der Vorrichtung wird es in Abhängigkeit vom verarbeiteten Baumstamm jeweils angehoben.

Es sei jetzt auf die Fig. la verwiesen, in der insgesamt die Transportmittel zum Zuführen eines Baumstammes 4 zum Sägeaggregat 6 dargestellt sind. Diese Transportmittel bestehen im Ausführungsbeispiel im wesentlichen aus einem angetriebenen Spannwagen 42 und einem nicht angetriebenen Schleppwagen 44. Beide Wagen sind auf einer Schienenführung 46 in Vorschubrichtung 2 vor- und zurückbewegbar.

Der Schleppwagen 44 weist ein Auflager 48 zur Aufnahme des vorlaufenden Endes eines Baumstammes auf. Wie bei 48' dargestellt, kann das Auflager abgesenkt werden, um mit Sicherheit außer Eingriff mit einem in Verarbeitung befindlichen Baumstamm gebracht zu werden.

Der Spannwagen 42 trägt eine Antriebseinheit 50 und eine Einspanneinrichtung 52 für das nachlaufende Ende eines Baumstammes. Die Einspanneinrichtung 52 ist mit einer Spanngabel 54 versehen, deren Arme sich in der zeichnerischen Darstellung der Fig. la beide in horizontaler Lage und damit in Deckung befinden. Die Spanngabel 54 ist mittels einer Drehlagerung 56 drehbar, und die Einspanneinrichtung 52 ist überdies in ihrer Lagerung 58 auf dem Spannwagen 42 höhen- und seitenverstellbar.

In der zeichnerischen Darstellung der Fig. 1a befindet sich der Schleppwagen 44 in Anlage an den ortsfesten Teilen der Vorrichtung, nämlich der Einzugseinrichtung 26, und der Spannwagen 42 liegt mit seinem vorderen Ende seinerseits an dem nachlaufenden Ende des Schleppwagens 44 an. Dies ist die am weitesten vorgeschobene Position beider Wagen, in der das Sägeaggregat den Baumstamm vollständig übernommen hat und das nachlaufende Ende des Baumstammes bereits aus der Spanngabel 54 freigegeben wurde. Für das Einspannen eines neuen Baumstammes befinden sich beide Wagen im Abstand von den ortsfesten Teilen der Vorrichtung und im Abstand voneinander. Ein neuer Baumstamm wird dann mit seinem nachlaufenden Ende in die Spanngabel 54 eingespannt und mit seinem vorlaufenden Ende auf das Auflager 48 des Schleppwagens 44 aufgelegt, über das das vorlaufende Ende des Stammes jedoch nach vorne etwas vorsteht. Zum Zuführen eines eingespannten Baumstammes bewegen sich beide Wagen gleichmäßig auf das Sägeaggregat 6 zu. Gelangt das vorlaufende Ende des Baumstammes an die untere Einzugswalze 30, wird es von dieser geringfügig an- und somit von dem Auflager 48 des Schleppwagens 44 abgehoben, der damit seine Zuführfunktion erfüllt hat und im Anschlag vor der Einzugseinrichtung 26 stehen bleibt. Die Führung des vorlaufenden Endes hat die untere Einzugswalze 30 als ortsfeste Unterstützungseinrichtung übernommen. Der Spannwagen führt das ausgerichtete, nachlaufende Ende des Baumstammes weiter. Kurz bevor sein vorderes Ende in Anschlag mit dem bereits stehenden Schleppwagen gelangt, muß die Spanngabel 54 den Baumstamm für dessen weiteres Einziehen in das Sägeaggregat freigeben. Sämtliche Ausrichtfunktionen des Spannwagens 42 sind im Ausführungsbeispiel für einen automatischen Ablauf vorgesehen, dessen Mittel nicht im einzelnen dargestellt sind. Der gesamten Transporteinrichtung, bestehend aus Spann- und Schleppwagen, kann eine (nicht dargestellte) optische Vermessungseinrichtung für den Baumstamm zugeordnet sein, deren Werte auf die Ausrichtmittel der Einspanneinrichtung 52 übertragen werden. Weitere Steuermittel dienen dazu, die Höhenverstellung des Sägeaggregates 6 in Abhängigkeit von den Abmessungen eines in Verarbeitung befindlichen Baumstammes vorzunehmen.

Es sei nun wieder auf die Fig. 1b Bezug genommen. Hinter der Abzieheinrichtung 28, deren angetriebene Walzen im wesentlichen nur das aus dem Mittelbereich des Baumstammes entstandene Model erfassen, weil es in senkrechter Richtung die größte Höhenabmessung hat, nicht jedoch die schmaleren Seitenbretter, sind Spaltkeile 60 angeordnet, die das Model seitlich führen und gleichzeitig die abgetrennte Seitenware zu beiden Seiten hin ableiten. Walzen 62 unterstützen den weiteren Förderweg des Models, der nicht mehr zum hier beschriebenen Teil der Vorrichtung gehört.

Der Vorrichtung kann auch noch eine Ablängeinrichtung für die Seitenware nachgeordnet sein. Bei normalen Ablängeinrichtungen ist für die Ausführung des Ablängens der Vorschub des Holzes im allgemeinen anzuhalten.

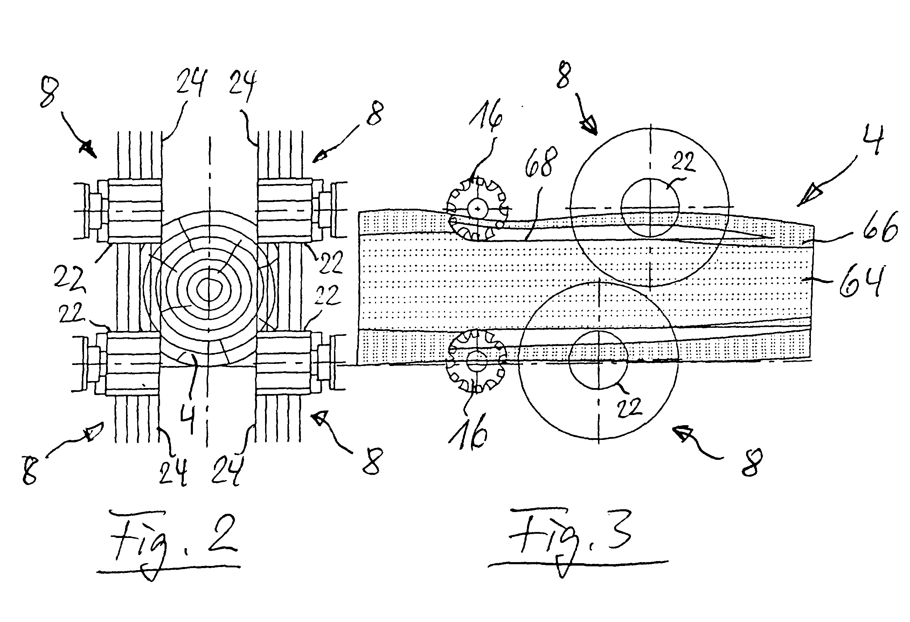

Aus den Fig. 2 und 3 ist die spanabhebende Arbeitsweise der Vorrichtung bzw. das mit ihr durchführbare Verfahren erkennbar.

Schematisch dargestellt ist in Fig. 2 die Doppelwellenkreissäge 8 mit fünf Sägeblättern auf jeder Welle. Die Sägewellen links und rechts des Baumstammes 4 bilden jeweils ein gemeinsames Paar, dessen sich entsprechende Sägeblätter einen gemeinsamen Trennschnitt ausführen. In Eingriff mit dem Baumstamm befinden sich gemäß Fig. 2 jeweils nur die drei inneren Sägeblätter. Neben der vom mittleren Sägeblatt abgetrennten (nicht dargestellten) Schwarte trennen die beiden jeweils inneren Sägeblätter zwei Seitenbretter vom Baumstamm 4 ab. Das in der Mitte verbleibende Model bleibt in jedem Fall oben und unten baumrandig. Es ist aus Fig. 2 erkennbar, daß die Wellen 22 der Doppelkreissägen 8 mit Eckbereichen des Baumstammes 4 kollidieren würden, wenn diese nicht vorher durch andere Mittel herausgearbeitet werden. Dies geschieht durch die in Fig. 3 dargestellten und der Doppelwellenkreissäge 8 vorgeordneten Begrenzungsfräser 16. In axialer Richtung erstrecken sich die Begrenzungsfräser 16 von beiden Seiten nicht über die Positionen der innersten Sägeblätter 24 bzw. die inneren Enden der Kreissägenwellen 22 hinaus. Wird die Position der inneren Kreissägeblätter 24 jedoch verändert, muß die Eintauchtiefe der Begrenzungsfräser 16 entsprechend mit ihnen verändert werden.

In Fig. 3 wurde versucht darzustellen, daß die Begrenzungsfräser 16 nur dann tätig werden müssen, wenn die senkrechte Dicke des Stammes in den Bereichen außerhalb der inneren Sägeblätter 24 ein bestimmtes Maß, nämlich den lichten Abstand zwischen den Sägewellen 22 überschreitet. So ist beispielsweise ein Seitenbrett 64, vor dem die angrenzende Schwarte bereits als abgetrennt gedacht ist, an seinen Kanten im Bereich 66 noch baumrandig, weil hier die Gesamtbreite des Seitenbrettes nicht den Abstand zwischen den Sägewellen 22 bzw. zwischen den Begrenzungsfräsern 16 überschritten hat, während seine Breite im Bereich 68 infolge des dort größeren Stammdurchmessers durch die einsetzenden Begrenzungsfräser 16 bereits reduziert wurde.

Durch die Arbeitsweise der Begrenzungsfräser 16 erübrigt sich das Ausrichten des Baumstammes für seinen Durchlauf durch das Sägeaggregat nicht. Zur gleichmäßigen Verteilung der Leistungsaufnahme der Doppelwellenkreissäge ist nämlich anzustreben, daß die Sägen eines Paares möglichst gleich tief in den Baumstamm eintauchen, andererseits soll durch die Begrenzungsfräser möglichst wenig Eckmaterial aus dem Baumstamm ausgespant werden, und auch nur dort, wo es erforderlich ist. Bei nicht höhenausgerichtetem Durchlauf eines relativ dicken Baumstammes durch die Vorrichtung würden die Begrenzungsfräser an einer Seite des Baumstammes möglicherweise sehr viel Material ausarbeiten müssen, während sie auf der gegenüberliegenden Seite gar nicht erst in Eingriff gelangen. Eine solche Arbeitsweise steht im allgemeinen der optimalen Ausnutzung eines Stammquerschnittes entgegen.

## Patentansprüche

1. Verfahren zum Einschneiden eines natürlichen Baumstammes mittels einer Doppelwellenkreissäge (8) in seitliche Schwarten, gegebenenfalls unbesäumte Seitenware und ein an zwei Seiten baumrandiges Model, bei dem der Baumstamm (4) in seiner Längsrichtung in Richtung auf die Doppelwellenkreissäge (8) ausgerichtet und die Dicke des Baumstammes (4) in seinen Bereichen außerhalb der zur Baumstammmitte hin weisenden innersten Sägeblätter (24) der Doppelwellenkreissäge (8) reduziert wird, wenn die Dicke des Baumstammes (4) in diesen Bereichen den lichten Abstand zwischen den Sägewellen (22) überschreitet, **dadurch gekennzeichnet**, daß der ausgerichtete Baumstamm (4) anfänglich drehfest in bis zur Doppelwellenkreissäge (8) mitbewegte Transportmittel (42, 44) eingespannt, und mit seinem vorlaufenden Ende über eine ortsfeste Unterstützungseinrichtung (30) in die Doppelwellenkreissäge (8) vorgeschoben wird, wobei die relative Höhenlage von ortsfester Unterstützungseinrichtung (30) und Doppelwellenkreissäge (8) kontinuierlich in einer Weise eingestellt wird, daß die gedachte Achse des Baumstammes (4) jeweils in etwa auf halber Höhe zwischen den Wellen (22) der Doppelwellenkreissäge (8) gehalten wird, und das die Doppelwellenkreissäge (8) verlassende Model an den durch Abtrennung der Schwarten bzw. weiterer Seitenware entstandenen Sägeflächen seitlich geführt wird.

2. Verfahren nach Anspruch 1, **dadurch gekennzeichnet**, daß der auf die ortsfeste Unterstützungseinrichtung (30) gebrachte Baumstamm (4) mittels einer Einzugseinrichtung (26) in die Doppelwellenkreissäge (8) vorgeschoben wird.

3. Verfahren nach Anspruch 2, **dadurch gekennzeichnet**, daß als Einzugseinrichtung (26) ein Paar horizontaler Walzen (30, 34) verwendet wird, deren untere die Unterstützungseinrichtung (30) ist.

4. Verfahren nach mindestens einem der Ansprüche 1-3, **dadurch gekennzeichnet**, daß das Model hinter der Doppelwellenkreissäge (8) aktiv aus dieser abgezogen wird.

5. Vorrichtung zum Einschneiden eines natürlichen Baumstammes (4) mittels einer Doppelwellenkreissäge (8) in seitliche Schwarten, gegebenenfalls unbesäumte Seitenware (64) und ein an zwei Seiten baumrandiges Model, die Mittel zum Ausrichten des Baumstammes auf die Doppelwellenkreissäge (8) aufweist und bei der der Doppelwellenkreissäge (8) Fräser (16) zugeordnet sind zum Reduzieren der Dicke des Baumstammes (4) in denjenigen Bereichen, in denen seine Dicke den lichten Abstand zwischen den Wellen (22) der Doppelwellenkreissäge (8) überschreitet, **gekennzeichnet durch**
- vor der Doppelwellenkreissäge (8) angeordnete Transportmittel (42, 44) für den Baumstamm (4) mit Einrichtungen (54) für ein anfängliches drehfestes Einspannen des Baumstammes (4), die mit den Transportmitteln (42) mitbewegbar sind,
- eine vor der Doppelwellenkreissäge (8) angeordnete ortsfeste Unterstützungseinrichtung (30) zur Unterstützung des in die Doppelwellenkreissäge (8) vorzuschiebenden Baumstammes (4),
- Mittel zum kontinuierlichen Verändern der relativen Höhenlage zwischen der ortsfesten Unterstützungseinrichtung (30) und der Doppelwellenkreissäge (8) in einer Weise, daß die gedachte Achse des Baumstammes (4) jeweils in etwa auf halber Höhe zwischen den Wellen (22) der Doppelwellenkreissäge (8) gehalten wird, und
- der Doppelwellenkreissäge nachgeordnete Mittel (60) zum Führen des die Doppelwellenkreissäge verlassenden Models an seinen seitlichen, gesägten Flächen.

6. Vorrichtung nach Anspruch 5, **dadurch gekennzeichnet**, daß die Doppelwellenkreissäge (8) gegenüber der ortsfesten Unterstützungseinrichtung (30) höhenverstellbar ausgebildet ist.

7. Vorrichtung nach Anspruch 6 oder 7, **dadurch gekennzeichnet**, daß die vor der Doppelwellenkreissäge (8) angeordneten Transportmittel (42, 44) einen in Vorschubrichtung (2) des Baumstammes (4) hin- und herbewegbaren, insbesondere gleisgebundenen, angetriebenen Spannwagen (42) zur Aufnahme des nachlaufenden Endes des Baumstammes (4) und einem zwischen Spannwagen (42) und der ortsfesten Unterstützungseinrichtung (30) angeordneten, ebenfalls hin- und herbewegbaren Schleppwagen (44) als zumindest zeitweises Auflager (48) für das vorlaufende Ende des Baumstammes (4) aufweisen.

8. Vorrichtung nach Anspruch 7, **dadurch gekennzeichnet**, daß die Ausrichtmittel (z.B. 56) für den Baumstamm (4) auf dem Spannwagen (42) angeordnet sind.

9. Vorrichtung nach mindestens einem der Ansprüche 5-8, **dadurch gekennzeichnet**, daß die Fräser (16) auf horizontalen Achsen fliegend gelagerte Walzenfräser sind und sich von beiden Seiten der Vorrichtung bis zu den Positionen der inneren Sägeblätter (24) der Doppelwellenkreissäge (8) in die Vorrichtung erstrecken.

10. Vorrichtung nach Anspruch 9, **dadurch gekennzeichnet,** daß die Walzenfräser (16) in Übereinstimmung mit der Position der inneren Sägeblätter (24) der Doppelwellenkreissäge (8) seitlich verstellbar sind.

11. Vorrichtung nach mindestens einem der Ansprüche 5-10, **dadurch gekennzeichnet**, daß vor der Doppelwellenkreissäge (8) als Einzugsmittel für den Baumstamm ein Paar horizontaler, angetriebener Einzugswalzen (30, 34) vorgesehen sind, von denen zumindest die obere (34) höhenverstellbar ist, zum Schließen des Walzenpaares um den Baumstamm (4).

12. Vorrichtung nach Anspruch 11, **dadurch gekennzeichnet**, daß die untere der Einzugswalzen als diese ortsfeste Unterstützungseinrichtung (30) ausgebildet ist.

13. Vorrichtung nach mindestens einem der Ansprüche 5-12, **dadurch gekennzeichnet**, daß der Doppelwellenkreissäge (8) Abziehmittel (28) für das erzeugte Model nachgeordnet sind, die eine obee und eine untere angetriebene Abzugswalze (32, 36) aufweisen.

14. Vorrichtung nach mindestens einem der Ansprüche 5-13, **dadurch gekennzeichnet**, daß die Mittel zum seitlichen Führen des Models breitenverstellbare Spaltkeile (60) sind.

15. Vorrichtung nach mindestens einem der Ansprüche 5-14, **dadurch gekennzeichnet**, daß die Drehzahl der Doppelwellenkreissäge (8) in Abhängigkeit von einer gewählten Vorschubgeschwindigkeit für den Baumstamm (4) veränderbar ist.

## Claims

1. Process for sawing a natural tree-trunk by means of a double-shaft circular saw (8) into lateral planks, optionally untrimmed lateral goods and a block rough-edged on two sides, in which the tree-trunk (4) is aligned in its longitudinal direction in the direction of the double-shaft circular saw (8) and the thickness of the tree-trunk (4) is reduced in its regions outside the innermost saw blades (24) of the double-shaft circular saw (8) pointing towards the centre of the tree-trunk, if the thickness of the tree-trunk (4) in these regions exceeds the clear distance between the saw shafts (22), characterised in that the aligned tree-trunk (4) is initially clamped to be resistant to rotation in transport means (42, 44) also moved as far as the double-shaft circular saw (8), and is pushed forwards with its leading end over a fixed supporting device (3) into the double-shaft circular saw (8), wherein the relative height position of fixed supporting device (30) and double-shaft circular saw (8) is adjusted continuously such that the intended axis of the tree-trunk (4) is held in each case approximately at half height between the shafts (22) of the double-shaft circular saw (8), and the block leaving the double-shaft circular saw (8) is guided laterally at the saw surfaces resulting by separating the planks or further lateral goods.

2. Process according to claim 1, characterised in that the tree-trunk (4) placed on the fixed supporting device (30) is pushed forward into the double-shaft circular saw (8) by means of a feeding device (26).

3. Process according to claim 2, characterised in that a pair of horizontal rollers (30, 34), the lower part of which is the supporting device (30), is used as feeding device (26).

4. Process according to at least one of claims 1-3, characterised in that the block is removed actively from the double-shaft circular saw (8) behind the latter.

5. Device for sawing a natural tree-trunk (4) by means of a double-shaft circular saw (8) into lateral planks, optionally untrimmed lateral goods (64) and a block rough-edged on two sides, which has means for aligning the tree-trunk on the double-shaft circular saw (8) and in which milling cutters (16) are assigned to the double-shaft circular saw (8) for reducing the thickness of the tree-trunk (4) in those regions in which its thickness exceeds the clear distance between the shafts (22) of the double-shaft circular saw (8), characterised by
- transport means (42, 44) for the tree-trunk (4) arranged in front of the double-shaft circular saw (8) having devices (54) for initial rotation-resistant clamping of the tree-trunk (4), which can also be moved with the transport means (42),
- a fixed supporting device (30) arranged in front of the double-shaft circular saw (8) for supporting the tree-trunk (4) to be pushed forward into the double-shaft circular saw (8),
- means for continuously changing the relative height position between the fixed supporting device (30) and the double-shaft circular saw (8) such that the intended axis of the tree-trunk (4) is held in each case approximately at half height between the shafts (22) of the double-shaft circular saw (8), and
- means (60) arranged downstream of the double-shaft circular saw for guiding the block leaving the double-shaft circular saw at its lateral sawn surfaces.

6. Device according to claim 5, characterised in that the double-shaft circular saw (8) is designed to be height-adjustable with respect to the fixed supporting device (30).

7. Device according to claim 6 or 7, characterised in that the transport means (42, 44) arranged in front of the double-shaft circular saw (8) have a driven clamping carriage (42) which can be moved back and forth in the advance direction (2) of the tree-trunk (4), in particular rail-mounted, for receiving the trailing end of the tree-trunk (4) and a tow carriage (44) arranged between clamping carriage (42) and the fixed supporting device (30), and can likewise be moved back and forth as an at least temporary support (48) for the advancing end of the tree-trunk (4).

8. Device according to claim 7, characterised in that the alignment means (for example 56) for the tree-trunk (4) are arranged on the clamping carriage (42).

9. Device according to at least one of claims 5-8, characterised in that the milling cutters (16) are plain milling cutters taper bore mounted on horizontal axes and extend into the device from both sides of the device to the positions of the inner saw blades (24) of the double-shaft circular saw (8).

10. Device according to claim 9, characterised in that the plain milling cutters (16) can be adjusted laterally in accordance with the position of the inner saw blades (24) of the double-shaft circular saw (8).

11. Device according to at least one of claims 5-10, characterised in that a pair of horizontal, driven feed rollers (30, 34), of which at least the upper one (34) is height-adjustable, are provided in front of the double-shaft circular saw (8) as feeding means for the tree-trunk, for closing the roller pair around the tree-trunk (4).

12. Device according to claim 11, characterised in that the lower of the feed rollers is designed as this fixed supporting device (30).

13. Device according to at least one of claims 5-12, characterised in that removing means (28) for the block produced, which have an upper and a lower driven take-up roller (32, 36), are arranged downstream of the double-shaft circular saw (8).

14. Device according to at least one of claims 5-13, characterised in that the means for lateral guiding of the block are width-adjustable separating wedges (60).

15. Device according to at least one of claims 5-14, characterised in that the speed of the double-shaft circular saw (8) can be altered as a function of a selected advance speed for the tree-trunk (4).

## Revendications

1. Procédé destiné à fendre, au moyen d'une scie circulaire à arbres jumelés (8), une grume naturelle en dosses latérales, le cas échéant, en plateaux latéraux non avivés et en une bille avec au moins deux rives flacheuses, dans lequel la grume (4) est alignée dans le sens long en direction de la scie circulaire à arbres jumelés (8) et l'épaisseur de la grume (4), dans ses zones en dehors des lames de scie (24) les plus intérieures de la scie circulaire à arbres jumelés (8), orientées vers le centre de la grume, est réduite si l'épaisseur de la grume (4) dans ces zones est supérieure à la distance entre les arbres (22) de la scie, caractérisé en ce que la grume (4) alignée est bloquée au début, de manière à ne pas tourner, dans des moyens de transport (42, 44) qui sont entraînés jusqu'à la scie circulaire à arbres jumelés (8), et est acheminée vers la scie circulaire à arbres jumelés (8) avec son extrémité avant en passant par un dispositif de support fixe (30), la position en hauteur du dispositif de support fixe (30) par rapport à la scie circulaire à arbres jumelés (8) étant régulée en continu de manière que l'axe imaginaire de la grume (4) est toujours maintenu pratiquement sur la moitié de la hauteur entre les arbres (22) de la scie circulaire à arbres jumelés (8), et la bille qui sort de la scie circulaire à arbres jumelés (8) est guidée latéralement sur les surfaces sciées obtenues par la coupe des dosses et d'autres plateaux latéraux.

2. Procédé selon la revendication 1, caractérisé en ce que la grume (4) déposée sur le dispositif de support fixe (30) est acheminée vers la scie circulaire à arbres jumelés (8) au moyen d'un dispositif d'admission (26).

3. Procédé selon la revendication 2, caractérisé en ce que le dispositif d'admission (26) utilisé est formé par deux cylindres horizontaux appariés (30, 34), parmi lesquels le cylindre inférieur constitue le dispositif de support (30).

4. Procédé selon au moins l'une quelconque des revendications 1 à 3, caractérisé en ce que la bille en aval de la scie circulaire à arbres jumelés (8) est évacuée activement hors de celle-ci.

5. Dispositif destiné à fendre, au moyen d'une scie circulaire à arbres jumelés (8), une grume (4) naturelle en dosses latérales, le cas échéant, en plateaux latéraux (64) non avivés et en une bille avec au moins deux rives flacheuses, lequel dispositif comprend des moyens destinés à aligner la grume (4) sur la scie circulaire à arbres jumelés (8) et dans lequel des fraises (16) sont associées à la scie circulaire à arbres jumelés (8) et sont destinées à réduire l'épaisseur de la grume (4) dans les zones dans lesquelles son épaisseur est supérieure à la distance entre les arbres (22) de la scie circulaire à arbres jumelés (8), caractérisé par
- des moyens de transport (42, 44) de la grume (4), montés en amont de la scie circulaire à arbres jumelés (8), comprenant des dispositifs (54) destinés à bloquer la grume (4) au début, de manière à ne pas tourner, lesquels peuvent être entraînés avec les moyens de transport (42),
- un dispositif de support fixe (30), monté en amont de la scie circulaire à arbres jumelés (8), est destiné à supporter la grume (4) à faire avancer vers la scie circulaire à arbres jumelés (8),
- des moyens destinés à faire varier en continu la position en hauteur du dispositif de support fixe (30) par rapport à la scie (8), de manière que l'axe imaginaire de la grume (4) est toujours maintenu pratiquement sur la moitié de la hauteur entre les arbres (22) de la scie circulaire à arbres jumelés (8), et
- des moyens (60) montés en aval de la scie circulaire à arbres jumelés et destinés à guider la bille qui sort de la scie circulaire à arbres jumelés sur ses faces latérales sciées.

6. Dispositif selon la revendication 5, caractérisé en ce que la scie circulaire à arbres jumelés (8) est conçue de telle sorte que sa hauteur soit réglable par rapport au dispositif de support fixe (30).

7. Dispositif selon la revendication 6 ou 7, caractérisé en ce que les moyens de transport (42, 44), montés en amont de la scie circulaire à arbres jumelés (8), comportent un chariot de serrage (42) actionné, pouvant se déplacer, en particulier sur des rails, dans un mouvement de va-et-vient dans le sens de transport (2) de la grume (4) et destiné à recevoir l'extrémité arrière de la grume (4), et un chariot-remorque (44) monté entre le chariot de serrage (42) et le dispositif de support fixe (30), pouvant également se déplacer dans un mouvement de va-et-vient et formant au moins temporairement une surface de support (48) pour l'extrémité avant de la grume (4).

8. Dispositif selon la revendication 7, caractérisé en ce que les moyens d'alignement (par exemple, 56) de la grume (4) sont disposés sur le chariot de serrage (42).

9. Dispositif selon au moins l'une des revendications 5 à 8, caractérisé en ce que les fraises (16) sont des fraises cylindriques, suspendues sur des axes horizontaux et s'étendent à partir de chacun des deux côtés du dispositif jusqu'aux points de positionnement des lames de scie (24) intérieures de la scie circulaire à arbres jumelés (8).

10. Dispositif selon la revendication 9, caractérisé en ce que les fraises cylindriques (16) peuvent être réglées latéralement en concordance avec la position des lames de scie (24) intérieures de la scie circulaire à arbres jumelés (8) .

11. Dispositif selon au moins l'une des revendications 5 à 10, caractérisé en ce qu'il est prévu en amont de la scie circulaire à arbres jumelés (8) des moyens d'admission de la grume, formés par deux cylindres d'admission horizontaux appariés (30, 34) actionnés, parmi lesquels au moins le cylindre supérieur (34) est réglable en hauteur pour fermer les deux cylindres appariés autour de la grume (4).

12. Dispositif selon la revendication 11, caractérisé en ce que la partie inférieure du cylindre d'admission est conçue comme dispositif de support fixe (30).

13. Dispositif selon au moins l'une des revendications 5 à 12, caractérisé en ce qu'en aval de la scie circulaire à arbres jumelés (8) sont montés des moyens d'évacuation (28) de la bille obtenue, lesquels comportent des cylindres d'évacuation actionnés supérieur et inférieur (32, 36).

14. Dispositif selon au moins l'une des revendications 5 à 13, caractérisé en ce que les moyens destinés au guidage latéral de la bille sont des coins à refendre (60) réglables en largeur.

15. Dispositif selon au moins l'une des revendications 5 à 14, caractérisé en ce que la vitesse de rotation de la scie circulaire à arbres jumelés (8) peut être variée en fonction de la vitesse de transport souhaitée de la grume (4).
